Europäisches Patentamt

European Patent Office

Office européen des brevets

(19)

(11) Veröffentlichungsnummer: **0 257 598 B1**

(12) **EUROPÄISCHE PATENTSCHRIFT**

(45) Veröffentlichungstag der Patentschrift: **11.11.92**

(51) Int. Cl.5: **C08G 63/60**, C08G 63/68, C08G 69/44, C08J 5/18

(21) Anmeldenummer: **87112205.7**

(22) Anmeldetag: **22.08.87**

(54) **Vollaromatische thermotrope Polyester und Polyesteramide.**

(30) Priorität: **28.08.86 DE 3629209**

(43) Veröffentlichungstag der Anmeldung:
**02.03.88 Patentblatt 88/09**

(45) Bekanntmachung des Hinweises auf die
Patenterteilung:
**11.11.92 Patentblatt 92/46**

(84) Benannte Vertragsstaaten:
**BE DE FR GB NL SE**

(56) Entgegenhaltungen:
EP-A- 0 001 185          EP-A- 0 024 499
EP-A- 0 134 956          EP-A- 0 220 737
EP-A- 0 230 545          EP-A- 0 230 546
DE-A- 3 000 610          GB-A- 2 158 832

(73) Patentinhaber: **BASF Aktiengesellschaft
Carl-Bosch-Strasse 38
W-6700 Ludwigshafen(DE)**

(72) Erfinder: **Hisgen, Bernd, Dr.
Goethestrasse 6
W-6703 Limburgerhof(DE)**
Erfinder: **Kock, Hans-Jakob, Dr.
Benckiserstrasse 63
W-6700 Ludwigshafen(DE)**
Erfinder: **Portugall, Michael, Dr.
Raiffeisenstrasse 7
W-6706 Wachenheim(DE)**
Erfinder: **Seiler, Erhard, Dr.
Erpolzheimer Strasse 1
W-6700 Ludwigshafen(DE)**
Erfinder: **Blinne, Gerd, Dr.
Im Woogtal 7
W-6719 Bobenheim(DE)**

# Beschreibung

Die Erfindung betrifft vollaromatische thermotrope Polyester und Polyesteramide auf der Basis von

A) 25 bis 60 mol% einer Mischung aus

A$_1$) 4-Hydroxibenzoesäure und

A$_2$) einer oder mehrerer der Verbindungen 3-Hydroxibenzoesäure, 4-Aminobenzoesäure, 3-Aminobenzoesäure oder deren kernsubstituierten Chlor-, Brom-, C$_1$-C$_8$-Alkyl- oder C$_1$-C$_8$-Alkoxyderivaten,

wobei das molare Verhältnis A$_1$:A$_2$ im Bereich von 5:1 bis 41:1 liegt,

B) 20 bis 37,5 mol% einer Mischung aus

B$_1$) Terephthalsäure und

B$_2$) Isophthalsäure

wobei das molare Verhältnis von B$_1$ : B$_2$ im Bereich von 1,04:1 bis 19:1 liegt, und

C) 20 bis 37,5 mol% einer Mischung aus

C$_1$) Hydrochinon

C$_2$) 4,4'-Dihydroxydiphenyl

wobei das molare Verhältnis von C$_1$ : C$_2$ im Bereich von 0,1:1 bis 2,67:1 und das molare Verhältnis von B:C im Bereich von 0,9:1 bis 1,1:1 liegt.

Weiterhin betrifft die Erfindung ein Verfahren zur Herstellung derartiger Polyester und Polyesteramide und deren Verwendung zur Herstellung von Fasern, Folien und Formkörpern sowie Formkörper, die die erfindungsgemäßen vollaromatischen thermotropen Polyester oder Polyesteramide als wesentliche Komponente enthalten.

Als "thermotrop" bezeichnet man ganz allgemein Substanzen, die flüssigkristalline Schmelzen bilden, d.h. Schmelzen mit anisotropen Eigenschaften.

Thermotrope aromatische Polyester aus aromatischen Dicarbonsäuren und Dihydroxyverbindungen sowie gegebenenfalls aromatischen Hydroxycarbonsäuren sind bekannt und z.B. in der GB-A-2 061 304, der DE-A-20 25 971, der EP-A-33 147 und der EP-A-92 843 beschrieben. Nachteilig an diesen bekannten Systemen ist der Umstand, daß sie in einem komplizierten und zeitaufwendigen mehrstufigen Prozeß hergestellt werden müssen. Auch weisen die Produkte in der Regel Schmelzpunkte oberhalb von 350°C auf, was die thermoplastische Verarbeitung wesentlich erschwert.

In der DE-A-35 17 587 werden thermoplastische Formmassen beschrieben, die neben einem Grundharz eines Oxibenzoyl-Copolyesters eine kleinere Menge eines polymeren Fließmodifikates enthält, der aus Terephthalsäure, Isophthalsäure, 4-Hydroxybenzoesäure, Hydrochinon und 4,4'-Dihydroxydiphenyl aufgebaut ist. Die in den Beispielen beschriebenen Fließmodifikatoren weisen zum einen sehr hohe Schmelzpunkte auf (Beispiel 3: mehr als 400°C) oder zeigen keinen kristallinen Schmelzpunkt, d.h. besitzen nur eine geringe Wärmeformbeständigkeit.

Aufgabe der vorliegenden Erfindung war es, vollaromatische thermotrope Polyester und Polyesteramide zur Verfügung zu stellen, die im Vergleich zu den in der DE-A-35 17 587 beschriebenen Fließmodifikatoren leichter thermoplastisch verarbeitet werden können und gleichzeitig eine verbesserte Wärmeformbeständigkeit aufweisen.

Diese Aufgabe wird erfindungsgemäß durch die eingangs definierten vollaromatischen thermotropen Polyester und Polyesteramide gelöst.

Die erfindungsgemäßen vollaromatischen Polyester und Polyesteramide bauen sich auf aus Einheiten, die sich von 4-Hydroxybenzoesäure (A$_1$), einer oder mehrerer der Verbindungen 3-Hydroxibenzoesäure, 4-Aminobenzoesäure oder 3-Aminobenzoesäure oder deren kernsubstituierten Chlor-, Brom-, C$_1$-C$_8$-Alkyl- oder Alkoxyderivaten (A$_2$), Terephthalsäure (B$_1$), Isophthalsäure (B$_2$), Hydrochinon (C$_1$ ) und 4,4'-Dichhydroxydiphenyl (C$_2$) ableiten.

Der Anteil der Komponente A liegt im Bereich von 25 bis 60, insbesondere von 35 bis 55 mol%.

Die Komponente A setzt sich zusammen aus 4-Hydroxibenzoesäure (A$_1$) und dem Verbindungen (A$_2$) im molaren Verhältnis von 5:1 bis 41:1, vorzugsweise von 6:1 bis 20:1 und insbesondere von 8:1 bis 15:1.

Bei den Verbindungen A$_2$ handelt es sich um 3-Hydroxibenzoesäure und 3-oder 4-Aminobenzoesäure oder deren kernsubstituierte Chlor-, Brom-, C$_1$-C$_8$-Alkyl- oder C$_1$-C$_8$-Alkoxyderivaten. Diese Verbindungen können einzeln oder in beliebigen Mischungen eingesetzt werden, solange das molare Verhältnis von A$_1$:A$_2$ im Bereich von 5:1 bis 41:1 liegt.

Vorzugsweise werden die unsubstituierten Verbindungen, d.h. 3-Hydroxibenzoesäure, 3-Aminobenzoesäure oder 4-Aminobenzoesäure eingesetzt. In manchen Fällen hat es sich als vorteilhaft erwiesen, Mischungen der Aminobenzoesäuren oder Mischungen aus Hydroxi- und Aminobenzoesäuren in beliebigem molaren Verhältnis als Komponente A$_2$ einzusetzen.

Von den substituierten Derivaten werden die Chlor-, Brom- und C$_1$-C$_6$-Alkyl, insbesondere Methyl- und Ethylderivate bevorzugt. Auch diese können einzeln oder in beliebigen Mischungen eingesetzt werden.

Die Mischungen aus Terephthalsäure und Isophthalsäure (Komponente B) werden in einer Menge von 20 bis 37,5, vorzugsweise 22,5 bis 32,5 mol%, eingesetzt. Entsprechendes gilt auch für den Anteil der Mischung der Dihydroxyverbindungen (Komponente C).

Das molare Verhältnis der Komponenten $B_1/B_2$, d.h. von Terephthalsäure zu Isophthalsäure liegt im Bereich von 1,04:1 bis 9:1, vorzugsweise von 1,5:1 bis 10:1.

Das molare Verhältnis von Hydrochinon ($C_1$) zu 4,4'-Dihydroxydiphenyl ($C_2$) liegt im Bereich von 0,1:1 bis 2,67:1, insbesondere von 0,5:1 bis 2,33:1.

Der thermotrope, d.h. flüssig-kristalline Zustand der erfindungsgemäßen vollaromatischen Polyester und Polyesteramide kann z.B. mit dem Polarisationsmikroskop nach einer in der DE-OS 25 20 819 beschriebenen Methode nachgewiesen werden. Zwischen gekreuzten Polarisatoren weisen die Polymerschmelzen, die in einer Schichtdicke von 10 $\mu$m zwischen Glasplatten aufgetragen sind, Texturen auf, die einer mesomorphen zugeordnet werden können.

Überraschend ist, daß die erfindungsgemäßen Polyester und Polyesteramide im Vergleich zu den in der DE-A-35 17 587 beschriebenen Fließmodifikationen deutlich verbesserte Eigenschaften hinsichtlich Verarbeitbarkeit und Wärmeformbeständigkeit aufweisen. Dies wird durch die Verwendung von Mischungen aus Isophthalsäure und Terephthalsäure als Dicarbonsäurekomponente und von Mischungen aus Hydrochinon und 4,4'-Dihydroxydiphenyl als Dihydroxykomponente erreicht.

Der Schmelzpunkt der Polyester und Polyesteramide liegt in der Regel im Bereich von 280 bis 350, insbesondere von 300 bis 350°C.

Die Wärmeformbeständigkeit, bestimmt nach ISO/R75, Methode A, ist im allgemeinen größer als 180°C, insbesondere größer als 200°C.

Der Schubmodul, bestimmt nach DIN 53 445, beträgt bei 200°C im allgemeinen mindestens 25 %, insbesondere mindestens noch 30 % des bei 20°C unter sonst gleichen Bedingungen gemessenen Wertes.

Die relative Viskosität der erfindungsgemäßen vollaromatischen Polyester und Polyesteramide, bestimmt in 0,1 gew.%iger Lösung in Pentafluorphenol bei 60°C, liegt vorzugsweise im Bereich von 1 bis 4, insbesondere von 1,5 bis 3,5 dl/g.

Die erfindungsgemäßen thermotropen Polyester und Polyesteramide lassen sich prinzipiell nach an sich bekannten Verfahren herstellen, wie sie z.B. in der US-A-4 375 530 und 4 118 372 beschrieben werden.

Vorteilhafterweise wird ein Verfahren angewandt, bei dem man die Ausgangsstoffe $A_1$, $A_2$, $B_1$, $B_2$, $C_1$ und $C_2$ in Gegenwart eines 5- bis 60 %igen molaren Überschusses eines Anhydrids einer Alkancarbonsäure mit 2 bis 6 C-Atomen einer einstufigen Polykondensation in der Schmelze unterwirft. Der molare Überschuß an Anhydrid bezieht sich dabei auf den Gesamtgehalt an OH-Gruppen in der Monomermischung.

Von den Anhydriden der Alkancarbonsäuren mit 2 bis 6 C-Atomen werden Essigsäureanhydrid, Propionsäureanhydrid und Buttersäureanhydrid, und ganz besonders Essigsäureanhydrid bevorzugt. Der molare Überschuß an Säureanhydrid beträgt vorzugsweise 10 bis 50 mol%.

Es hat sich auch als vorteilhaft herausgestellt, die Umsetzung unter Inertgasatmosphäre, z.B. Stickstoff oder Argon, durchzuführen.

Manchmal ist es vorteilhaft, durch Verwendung von Katalysatoren, z.B. solchen wie sie in der EP-A-131 846 beschrieben werden, die Umsetzung zu beschleunigen. In diesem Fall beträgt der Anteil dieser Katalysatoren 0,001 bis 1 Gew.%, bezogen auf die Gesamtmenge der eingesetzten Monomeren.

Im folgenden wird eine besonders bevorzugte Ausführungsform eines Verfahrens beschrieben.

Die Monomeren $A_1$, $A_2$, $B_1$, $B_2$, $C_1$ und $C_2$ und das Carbonsäureanhydrid werden unter Inertgasatmosphäre vermischt und unter Rühren bis zum Rückfluß erhitzt. Dabei ist es vorteilhaft, die Temperatur stufenweise zu steigern indem man zunächst bis zu 5 Stunden, vorzugsweise bis zu 2 Stunden bei einer Temperatur von 130 bis 200°C hält und anschließend die Temperatur vorzugsweise innerhalb eines Zeitraums von 2 bis 2,5 Stunden auf 250 bis 370°C erhöht. Dabei werden im Verlauf der Reaktion überschüssiges Carbonsäureanhydrid und gebildete Carbonsäuren abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen vollaromatischen Polyester oder Polyesteramide können anschließend einer Nachkondensation in fester Phase unterworfen werden. Diese wird vorzugsweise bei Temperaturen im Bereich von 200 bis 300°C, vorzugsweise von 200 bis 280°C, vorgenommen. Es ist auch möglich, die Nachkondensation in fester Phase nach einer thermoplastischen Verarbeitung vorzunehmen.

Vorteilhafterweise wird auch die Kondensation in fester Phase in Inertgasatmosphäre, z.B. unter Stickstoff oder Argon, durchgeführt.

Das vorstehend beschriebene Verfahren zeichnet sich dadurch aus, daß in einer Stufe in einer relativ kurzen Zeit vollaromatische Polyester oder Polyesteramide mit vorteilhaften Eigenschaften erhalten werden.

Den erfindungsgemäßen vollaromatischen Polyestern oder Polyesteramiden können übliche Zusatzstoffe und Verarbeitungshilfsmittel zugesetzt werden. Hier seien nur Stabilisatoren gegen Oxidation, Wärme, UV-Licht, Gleit- und Entformungsmittel, Farbstoffe und Pigmente, faser- oder pulverförmige Füllstoffe und Verstärkungsmittel, Keimbildungsmittel, Nukleierungsmittel, oder Weichmacher genannt. Derartige Zusätze sind an sich bekannt und in der Literatur beschrieben.

Als Beispiele für Oxidationsverzögerer und Wärmestabilisatoren seien nur Halogenide von Metallen der Gruppe I des Periodensystems, gegebenenfalls in Abmischung mit Kupfer-I-halogeniden oder sterisch gehinderten Phenolen in Konzentrationen bis zu 1 Gew.% angeführt.

Als UV-Stabilisatoren sind substituierte Resorcine, Salicylate, Benzotriazole, Benzophenone sowie deren Mischungen geeignet, die im allgemeinen in Mengen bis zu 2 Gew.% zugesetzt werden.

Farbstoffe und Pigmente werden im allgemeinen in Mengen bis zu 5 Gew.% eingesetzt. Als Beispiele seien Nigrosin, Titandioxid, Cadmiumsulfid, Phthalocyaninfarbstoffe, Ultramarinblau oder Ruß genannt.

Füllstoffe und Verstärkungsmittel sind beispielsweise Kohlenstoffasern, Glasfasern, amorphe Kieselsäure, Calciumsilikat, Aluminiumsilikat, Magnesiumcarbonat, Kaolin, Kreide, gepulverter Quarz, Glimmer und Feldspat die bis zu 70 Gew.%, bezogen auf das Gesamtgewicht der gefüllten Masse ausmachen können.

Als Keimbildungsmittel seien Talkum, Calciumfluorid, Natriumphenylphosphinat, Aluminiumoxid und feinteiliges Polytetrafluorethylen genannt.

Weiterhin können bis zu 20 Gew.% Weichmacher wie Phthalsäureester, Kohlenwasserstofföle und Sulfonamide eingesetzt werden.

Die erfindungsgemäßen vollaromatischen Polyester und Polyesteramide weisen eine hervorragende Wärmeformbeständigkeit und eine glatte, glänzende und sehr abriebfeste Oberfläche bei sehr heller Eigenfarbe auf. Außerdem sind sie weitgehend chemikalienbeständig, schwer entflammbar und besitzen eine für Polyester und Polyesteramide ausgezeichnete Hydrolysestabilität.

Aus den erfindungsgemäßen vollaromatischen Polyestern oder Polyesteramiden hergestellte Formkörper zeichnen sich durch hervorragende mechanische Eigenschaften insbesondere Steifigkeit, Festigkeit und Zähigkeit aus. Die vollaromatischen Polyester und Polyesteramide eignen sich daher besonders zur Herstellung von Formkörpern für die Elektro- und Datentechnik, den Fahrzeugbau und andere technische Bereiche.

Daneben können aus den erfindungsgemäßen Polyestern oder Polyesteramiden Fasern und Folien mit einem guten Eigenschaftsspektrum hergestellt werden.

Die Verarbeitung der erfindungsgemäßen Polyester und Polyesteramide kann in der Regel bei Temperaturen von unterhalb 370°C durch Spritzguß, Pressen oder Extrusion erfolgen.

Beispiel 1

Zur Herstellung eines erfindungsgemäßen Polyesters wurden folgende Komponenten eingesetzt:
4,2 mol (40,0 mol%) 4-Hydroxibenzoesäure
0,3 mol ( 2,85 mol%) 3-Hydroxibenzosäure
2,7 mol (25,73 mol%) Terephthalsäure
0,3 mol ( 2,85 mol%) Isophthalsäure
1,8 mol (17,14 mol%) Hydrochinon und
1,2 mol (11,43 mol%) 4,4'-Dihydroxidiphenyl
Diese Komponenten wurden zusammen mit 1360 ml (14,4 mol) Essigsäureanhydrid in einem 5 l-Reaktionskessel unter Stickstoff vorgelegt. Unter Rühren wurde innerhalb von 30 min auf 150°C, anschließend innerhalb von 150 min auf 345°C Außentemperatur erhitzt. Im Anschluß daran wurde der Druck auf 560 mbar und im weiteren Verlauf jeweils innerhalb von 10 min auf die Hälfte des vorherigen Wertes reduziert. Die Außentemperatur wurde dabei auf 360°C erhöht.

Der Enddruck betrug 65 mbar.

Die inhärente Viskosität des erhaltenen Polyesters betrug 1,9 dl/g, gemessen in 0,1 gew.%iger Lösung in Pentafluorphenol bei 60°C.

Der Polyester bildete eine fadenbildende mesomorphe Schmelze.

Aus DSC-Messungen (Differential Scanning Calorimetry) ergab sich ein Schmelzpunkt von 345°C.

Das Polymere ließ sich bei 360°C problemlos im Spritzguß verarbeiten.

Die Wärmeformbeständigkeit nach ISO/R75 betrug nach Methode B mehr als 250°C.

Der Schubmodul nach DIN 53 445 bei 200°C betrug noch 36 % des unter sonst identischen Bedingungen bei 20°C gemessenen Wertes.

Beispiel 2

Es wurden folgende Komponenten eingesetzt:
4,2 mol (40 mol%) 4-Hydroxibenzoesäure
0,3 mol ( 2,85 mol%) 3-Hydroxibenzoesäure
2,4 mol (22,89 mol%) Terephthalsäure
0,6 mol ( 5,70 mol%) Isophthalsäure
1,5 mol (14,28 mol%) Hydrochinon und
1,5 mol (14,28 mol%) 4,4'-Dihydroxydiphenyl
Die Ausgangsverbindungen wurden zusammen mit 1326 ml (14,07 mol) Essigsäureanhydrid vermischt und wie in Beispiel 1 beschrieben umgesetzt.

Die Endtemperatur betrug 360°C und der Enddruck 60 mbar.

Die inhärente Viskosität wurde zu 2,0 dl/g, bestimmt wie in Beispiel 1, gemessen.

Der Schmelzpunkt (aus DSC-Messungen) lag bei 320°C.

Das Polymere ließ sich bei 340°C problemlos im Spritzguß verarbeiten; die Wärmeformbeständigkeit nach ISO/R75 betrug nach Methode 8 mehr als 250°C.

Der Schubmodul nach DIN 53 445 betrug bei 200°C noch 28 % des unter sonst identischen Bedingungen bei 20°C gemessenen Wertes.

Beispiel 3

Es wurden folgende Ausgangsverbindungen eingesetzt:
3,15 mol (30 mol%) 4-Hydroxibenzoesäure
0,35 mol ( 3,35 mol%) 3-Hydroxibenzoesäure
3,15 mol (30 mol%) Terephthalsäure
0,35 mol ( 3,35 mol%) Isophthalsäure
2,1 mol (20 mol%) Hydrochinon und
1,4 mol (13,3 mol%) 4,4'-Dihydroxidiphenyl
Die Ausgangskomponenten wurden zusammen mit 1320 ml (14,07 mol) Essigsäureanhydrid wie in Beispiel 1 beschrieben umgesetzt. Die Endtemperatur betrug 360°C und der Enddruck 45 mbar.

Die inhärente Viskosität des erhaltenen Produkts, bestimmt wie in Beispiel 1, betrug 1,8 dl/g, der Schmelzpunkt aus DSC-Messungen ergab sich zu 335°C und der Schubmodul nach DIN 53 445 betrug bei 200°C noch 32 % des Werts der bei 20°C bestimmt wurde.

Das Polymere ließ sich bei 360°C problemlos im Spritzguß verarbeiten.

Beispiel 4

Zur Herstellung eines erfindungsgemäßen Polyesteramids wurden folgende Komponenten eingesetzt:
4,2 mol (40,0 mol%) 4-Hydroxibenzoesäure
0,3 mol ( 2,85 mol%) 3-Aminobenzoesäure
2,7 mol (25,73 mol%) Terephthalsäure
0,3 mol ( 2,85 mol%) Isophthalsäure
1,8 mol (17,14 mol%) Hydrochinon und
1,2 mol (11,43 mol%) 4,4'-Dihydroxidiphenyl
Diese Komponenten wurden zusammen mit 1360 ml (14,4 mol) Essigsäureanhydrid in einem 5 l-Reaktionskessel unter Stickstoff vorgelegt. Unter Rühren wurde innerhalb von 30 min auf 150°C, anschließend innerhalb von 150 min auf 350°C Außentemperatur erhitzt. Im Anschluß daran wurde der Druck auf 680 mbar und im weiteren Verlauf jeweils innerhalb von 10 min auf die Hälfte des vorherigen Wertes reduziert. Die Außentemperatur wurde dabei auf 360°C erhöht.

Der Enddruck betrug 85 mbar.

Die inhärente Viskosität des erhaltenen Polyesteramids betrug 2,6 dl/g, gemessen in 0,1 gew.%iger Lösung in Pentafluorphenol bei 60°C.

Das Polyesteramid bildete eine fadenbildende mesomorphe Schmelze.

Aus DSC-Messungen (Differential Scanning Calorimetry) ergab sich ein Schmelzpunkt von 335°C.

Das Polymere ließ sich bei 350°C problemlos im Spritzguß verarbeiten.

Die Wärmeformbeständigkeit nach ISO/R75 betrug nach Methode B mehr als 250°C.

Der Schubmodul nach DIN 53 445 bei 200°C betrug noch 29 % des unter sonst identischen Bedingungen bei 20°C gemessenen Wertes.

Beispiel 5

Es wurden folgende Komponenten eingesetzt:
4,2 mol (40 mol%) 4-Hydroxibenzoesäure
0,3 mol ( 2,85 mol%) 4-Aminobenzoesäure
2,4 mol (22,89 mol%) Terephthalsäure
0,6 mol ( 5,70 mol%) Isophthalsäure
1,8 mol (17,14 mol%) Hydrochinon und
1,5 mol (11,44 mol%) 4,4'-Dihydroxydiphenyl
Die Ausgangsverbindungen wurden zusammen mit 1330 ml (14,1 mol) Essigsäureanhydrid vermischt und wie in Beispiel 1 beschrieben umgesetzt.

Die Endtemperatur betrug 360°C und der Enddruck 43 mbar.

Die inhärente Viskosität wurde zu 2,6 dl/g, bestimmt wie in Beispiel 1, gemessen.

Der Schmelzpunkt (aus DSC-Messungen) lag bei 340°C.

Das Polymere ließ sich bei 360°C problemlos im Spritzguß verarbeiten; die Wärmeformbeständigkeit nach ISO/R75 betrug nach Methode B mehr als 250°C.

Der Schubmodul nach DIN 53 445 betrug bei 200°C noch 34 % des unter sonst identischen Bedingungen bei 20°C gemessenen Wertes.

Beispiel 6

Es wurden folgende Ausgangsverbindungen eingesetzt:
4,05 mol (38,57 mol%) 4-Hydroxibenzoesäure
0,45 mol ( 4,29 mol%) 4-Aminobenzoesäure
2,4 mol (22,86 mol%) Terephthalsäure
0,6 mol ( 5,71 mol%) Isophthalsäure
1,8 mol (17,14 mol%) Hydrochinon und
1,2 mol (11,43 mol%) 4,4'-Dihydroxidiphenyl
Die Ausgangskomponenten wurden zusammen mit 1330 ml (14,1 mol) Essigsäureanhydrid wie in Beispiel 1 beschrieben umgesetzt. Die Endtemperatur betrug 360°C und der Enddruck 55 mbar.

Die inhärente Viskosität des erhaltenen Produkts, bestimmt wie in Beispiel 1, betrug 2,4 dl/g, der Schmelzpunkt aus DSC-Messungen ergab sich zu 345°C und der Schubmodul nach DIN 53 445 betrug bei 200°C noch 36 % des Werts der bei 20°C bestimmt wurde.

Das Polymere ließ sich bei 360°C problemlos im Spritzguß verarbeiten.

Vergleichsbeispiel 1 (Beispiel 3 der DE-OS 35 17 587)

Es wurden folgende Komponenten eingesetzt:
0,306 mol (50 mol%) 4-Hydroxybenzoesäure

0,134 mol (21,85 mol%) Terephthalsäure
0,019 mol ( 3,03 mol%) Isophthalsäure und
0,154 mol (25,12 mol%) 4,4'-Dihydroxydiphenyl
Die Komponenten werden mit 67,4 ml Essigsäureanhydrid wie in Beispiel 1 beschrieben umgesetzt.

Die Endtemperatur außen betrug 360°C, der Enddruck 8 mbar.

Im Gegensatz zu den Beispielen 1 bis 6, in denen nach der Reaktion eine fadenbildende mesomorphe Schmelze erhalten wurde, war das Reaktionsprodukt in diesem Fall fest und besaß eine grau-gelbe Farbe.

Das Polymere konnte bis 400°C nicht geschmolzen werden und war in Pentafluorphenol unlöslich, so daß auch keine relative Viskosität bestimmt werden konnte.

Ein nach dem Verfahren in der DE-A-35 17 587 (Beispiel 3) hergestelltes Produkt der gleichen Zusammensetzung war ebenfalls bis 400°C nicht schmelzbar und damit unterhalb dieser Temperatur thermoplastisch nicht zu verarbeiten.

Vergleichsbeispiel 2 (Beispiel 4 aus DE-A-35 17 587)

Es wurden folgende Komponenten eingesetzt:
0,37 mol (64,92 mol%) 4-Hydroxybenzoesäure
0,1 mol (17,54 mol%) Isophthalsäure und
0,1 mol (17,54 mol%) 4,4'-Dihydroxydiphenyl
Die Komponenten wurden mit 62 ml Essigsäureanhydrid wie in Beispiel 1 beschrieben umgesetzt.

Die Endtemperatur betrug in diesem Fall 330°C, der Enddruck 53 mbar.

Die inhärente Viskosität des erhaltenen Produkts betrug 1,9 dl/g, und das Polymere zeigte eine gute Fadenbildungstendenz aus der anisotropen Schmelze.

Der Schubmodul nach DIN 53 445 betrug bei 200°C jedoch lediglich noch 0,6 % des unter sonst identischen Bedingungen bei 20°C gemessenen Werts.

Die vorstehenden Beispiele zeigen, daß sich die erfindungsgemäßen vollaromatischen Polyester und Polyesteramide insbesondere im Vergleich zu den aus DE-A-35 17 587 bekannten Produkten durch ein insgesamt wesentlich verbessertes Eigenschaftsspektrum auszeichnen.

## Patentansprüche

1. Vollaromatische thermotrope Polyester und Polyesteramide auf der Basis von
   A) 25 bis 60 mol% einer Mischung aus
   $A_1$) 4-Hydroxibenzoesäure und
   $A_2$) einer oder mehrerer der Verbindungen 3-Hydroxibenzoesäure, 4-Aminobenzoesäure, 3-Aminobenzoesäure oder deren kernsubstituierten Chlor-, Brom-, $C_1$-$C_8$-Alkyl- oder $C_1$-$C_8$-Alkoxyderivaten, wobei das molare Verhältnis $A_1$:$A_2$ im Bereich von 5:1 bis 41:1 liegt,
   B) 20 bis 37,5 mol% einer Mischung aus
   $B_1$) Terephthalsäure und
   $B_2$) Isophthalsäure
   wobei das molare Verhältnis von $B_1$ : $B_2$ im Bereich von 1,04:1 bis 19:1 liegt, und
   C) 20 bis 37,5 mol% einer Mischung aus
   $C_1$) Hydrochinon
   $C_2$) 4,4'-Dihydroxydiphenyl
   wobei das molare Verhältnis von $C_1$ : $C_2$ im Bereich von 0,1:1 bis 2,67:1 und das molare Verhältnis von B:C im Bereich von 0,9:1 bis 1,1:1 liegt.

2. Vollaromatische thermotrope Polyester und Polyesteramide nach Anspruch 1, dadurch gekennzeichnet, daß das molare Verhältnis von $A_1$ : $A_2$ im Bereich von 6:1 bis 20:1 liegt.

3. Vollaromatische thermotrope Polyester und Polyesteramide nach den Ansprüchen 1 und 2, dadurch gekennzeichnet, daß das molare Verhältnis der Komponenten $B_1$ : $B_2$ im Bereich von 1,5:1 bis 10:1 liegt.

4. Vollaromatische thermotrope Polyester und Polyesteramide nach den Ansprüchen 1 bis 3, dadurch gekennzeichnet, daß das molare Verhältnis der Komponenten $C_1$ : $C_2$ im Bereich von 0,5:1 bis 2,33:1 liegt.

5. Verfahren zur Herstellung von vollaromatischen thermotropen Polyestern und Polyesteramiden gemäß den Ansprüchen 1 bis 4 durch einstufige Polykondensation in der Schmelze in Gegenwart von Anhydriden von Alkancarbonsäure mit 2 bis 6 C-Atomen, dadurch gekennzeichnet, daß man
   a) die Komponenten $A_1$, $A_2$, $B_1$, $B_2$, $C_1$ und $C_2$ in Gegenwart eines 5 bis 60 %igen molaren Überschusses, bezogen auf den Gesamtgehalt an OH-Gruppen, der Anhydride der Alkancarbonsäuren umsetzt und, gegebenenfalls,
   b) die erhaltenen Produkte einer Nachkondensation in fester Phase unterwirft.

6. Verwendung der vollaromatischen thermotropen Polyester und Polyesteramide gemäß den Ansprüchen 1 bis 4 oder wie nach Anspruch 5 erhalten zur Herstellung von Fasern, Fäden, Folien und Formkörpern.

7. Dimensionsstabile Formkörper, enthaltend als wesentliche Komponente vollaromatische thermotrope Polyester oder Polyesteramide gemäß den Ansprüchen 1 bis 4 oder wie nach Anspruch 5 erhalten.

## Claims

1. A wholly aromatic thermotropic polyester or polyesteramide based on

     A) from 25 to 60 mol % of a mixture of

         $A_1$) 4-hydroxybenzoic acid and

         $A_2$) one or more of the compounds 3-hydroxybenzoic acid, 4-aminobenzoic acid or 3-aminobenzoic acid or their chlorine, bromine, $C_1$-$C_8$-alkyl or $C_1$-$C_8$-alkoxy derivatives, substituted in the nucleus,

     the molar ratio $A_1$ to $A_2$ being from 5:1 to 41:1,

     B) from 20 to 37.5 mol % of a mixture of

         $B_1$) terephthalic acid and

         $B_2$) isophthalic acid,

     the molar ratio of $B_1$ to $B_2$ being from 1.04:1 to 19:1, and

     C) from 20 to 37.5 mol % of a mixture of

         $C_1$) hydroquinone and

         $C_2$) 4,4'-dihydroxydiphenyl,

     the molar ratio of $C_1$ to $C_2$ being from 0.1:1 to 2.67:1 and the molar ratio of B to C being from 0.9:1 to 1.1:1.

2. A wholly aromatic thermotropic polyester or polyesteramide as claimed in claim 1, wherein the molar ratio of $A_1$ to $A_2$ is from 6:1 to 20:1.

3. A wholly aromatic thermotropic polyester or polyesteramide as claimed in claim 1 or 2, wherein the molar ratio of components $B_1$ to $B_2$ is from 1.5:1 to 10:1.

4. A wholly aromatic thermotropic polyester or polyesteramide as claimed in claim 1 or 2 or 3, wherein the molar ratio of components $C_1$ to $C_2$ is from 0.5:1 to 2.33:1.

5. A process for the preparation of a wholly aromatic thermotropic polyester or polyesteramide as claimed in claim 1 or 2 or 3 or 4, by single-stage polycondensation in the melt in the presence of an anhydride of an alkanecarboxylic acid of 2 to 6 carbon atoms, wherein

     a) the components $A_1$, $A_2$, $B_1$, $B_2$, $C_1$ and $C_2$ are reacted in the presence of a 5-60% molar excess, based on the total content of OH groups, of the anhydride of the alkanecarboxylic acid and, if desired,

     b) the resulting product is subjected to post-condensation in the solid phase.

6. Use of a wholly aromatic thermotropic polyester or polyesteramide as claimed in claim 1 or 2 or 3 or 4 or obtained as claimed in claim 5 for the preparation of fibers, filaments, films and moldings.

7. A dimensionally stable molding containing, as an essential component, a wholly aromatic thermotropic polyester or polyesteramide as claimed in claim 1 or 2 or 3 or 4 or obtained as claimed in claim 5.

## Revendications

1. Polyesters et polyesteramides thermotropes entièrement aromatiques, à base de

     A) 25 à 60% en moles d'un mélange

         $A_1$) d'acide 4-hydroxybenzoïque et

         $A_2$) d'un ou de plusieurs des composés acide 3-hydroxybenzoïque, acide 4-aminobenzoïque, acide 3-aminobenzoïque ou de leurs dérivés substitués sur le noyau par des atomes de chlore, de brome ou des restes alkyle en $C_1$-$C_8$ ou alcoxy en $C_1$-$C_8$,

     le rapport molaire $A_1$:$A_2$ se situant dans la gamme de 5:1 à 41:1,

     B) 20 à 37,5% en moles d'un mélange

         $B_1$) d'acide téréphtalique et

         $B_2$) d'acide isophtalique,

     le rapport molaire $B_1$:$B_2$ se situant dans la gamme de 1,04:1 à 19:1, et

     C) 20 à 37,5% en moles d'un mélange

         $C_1$) d'hydroquinone et

         $C_2$) de 4,4'-dihydroxydiphényle,

     le rapport molaire $C_1$:$C_2$ se situant dans la gamme de 0,1:1 à 2,67:1 et le rapport molaire B:C se situant dans la gamme de 0,9:1 à 1,1:1.

2. Polyesters et polyesteramides thermotropes entièrement aromatiques selon la revendication 1, caractérisés en ce que le rapport molaire $A_1$:$A_2$ se situe dans la gamme de 6:1 à 20:1.

3. Polyesters et polyesteramides thermotropes entièrement aromatiques selon la revendication 1 ou 2, caractérisés en ce que le rapport molaire des composants $B_1$:$B_2$ se situe dans la gamme de 1,5:1 à 10:1.

4. Polyesters et polyesteramides thermotropes entièrement aromatiques selon l'une quelconque des revendications 1 à 3, caractérisés en ce que le rapport molaire des composants $C_1$:$C_2$ se situe dans la gamme de 0,5:1 à 2,33:1.

**5.** Procédé de préparation de polyesters et de polyesteramides thermotropes entièrement aromatiques selon l'une quelconque des revendications 1 à 4 par une polycondensation en une seule étape dans la masse fondue, en présence d'anhydrides d'acides alcane-carboxyliques à 2-6 atomes de carbone, caractérisé en ce que

a) on fait réagir les composants $A_1$, $A_2$, $B_1$, $B_2$, $C_1$ et $C_2$ en présence d'un excès molaire de 5 à 60%, par rapport à la teneur totale en groupements OH, des anhydrides des acides alcane-carboxyliques et, éventuellement,

b) on soumet les produits obtenus à une post-condensation en phase solide.

**6.** Utilisation des polyesters et polyesteramides thermotropes entièrement aromatiques selon l'une quelconque des revendications 1 à 4 ou tels qu'obtenus selon la revendication 5, pour la fabrication de fibres, de fils, de feuilles et de corps moulés.

**7.** Corps moulés dimensionnellement stables, contenant, en tant que composant essentiel, des polyesters et polyesteramides thermotropes entièrement aromatiques selon l'une quelconque des revendications 1 à 4 ou tels qu'obtenus selon la revendication 5.